# EUROPEAN PATENT SPECIFICATION

(11) **EP 2 405 596 B1**
(45) Date of publication and mention of the grant of the patent: **08.08.2018**
(21) Application number: 09841153.1
(22) Date of filing: 06.11.2009
(51) Int. Cl.: H04B 1/74, H04B 10/00

(54) **OPTICAL TRANSMISSION APPARATUS**
OPTISCHE ÜBERTRAGUNGSVORRICHTUNG
APPAREIL DE TRANSMISSION OPTIQUE

(30) Priority: 04.03.2009 JP 2009050929
(43) Date of publication of application: 11.01.2012
(73) Proprietor: Mitsubishi Electric Corporation, Tokyo 100-8310 (JP)
(72) Inventor: HORIUCHI, Eiichi, Tokyo 100-8310 (JP); YOSHIDA, Sota, Tokyo 100-8310 (JP); KUBO, Kazuo, Tokyo 100-8310 (JP)
(74) Representative: J A Kemp
(86) International application number: PCT/JP2009/068990
(87) International publication number: WO 2010/100793

(56) References cited:
- WO-A2-02/11296
- WO-A2-99/44317
- JP-A- 4 051 723
- JP-A- 4 095 420
- JP-A- 9 064 790
- JP-A- 61 113 326
- JP-A- 2000 332 655
- JP-A- 2006 041 921
- JP-A- 2008 258 701
- US-A- 5 926 102
- US-A1- 2006 056 842
- US-B1- 6 603 736

## Description

The present invention relates to an optical transmission apparatus having a redundancy switching function.

Conventionally, an optical transmission apparatus having a redundancy switching function is equipped with N working transponders and a backup transponder. When signals from client devices, STM (Synchronous Transport Module)-64 signals, for example, are input to an optical transmission apparatus, working transponders transmit optical signals to an opposing apparatus (an optical transmission apparatus). In the opposing apparatus, working transponders that have received the optical signals convert the signals into STM-64 signals and transmit the STM-64 signals to client devices. In a state where there is no failure in the working transponders, the optical transmission apparatus normally transfers the signals from the client devices via the working transponders. When a working transponder has a breakdown and a failure is detected in the own apparatus or in the opposing apparatus, the signals are transferred via the backup transponder.

Patent Literature 1 mentioned below discloses a technique that, when any of working transponders that transmit or receive N signals has a breakdown, enables an optical transmission apparatus to switch to transfer the signals via a backup transponder, thereby limiting a transmission interruption time to a time period just for changing a switching status of an optical switch and providing highly-reliable optical transmission.

### Patent Literature

Patent Literature 1: Japanese Patent Application Laid-open No. 2000-332655
WO 02/11296 A2 discloses an optical device that comprises N working units and a fault protection unit. In the event of a failure, the working unit dealing with the lowest priority traffic behaves as the protection unit.

However, because the conventional technique performs protection by using only one backup transponder, all the signals need to be of the same type. Accordingly, an optical transmission apparatus in which a mixture of STM-64 signals and 10GbE LAN (10 Gigabit Ethernet® Local Area Network) signals having different transmission rates is included and stored therein, for example, requires backup transponders corresponding to the signal types. Therefore, a configuration thereof becomes complicated and installation costs are increased.

The present invention has been achieved in view of the above problems and an object of the present invention is to provide an optical transmission apparatus that can protect different types of signals with a common backup transponder.

According to the present invention, there is provided an optical transmission apparatus as defined in the independent claim.

According to the present invention, highly-reliable optical transmission can be realized with a simple configuration and lower installation costs.
The present invention will be described by way of example with reference to the accompanying drawings, in which:-
[FIG. 1] FIG. 1 is a configuration example of an optical transmission network.
[FIG. 2] FIG. 2 is a configuration example of a backup transponder unit.
[FIG. 3] FIG. 3 is a sequence diagram of switching control.
[FIG. 4] FIG. 4 is a sequence diagram of switching control.

Exemplary embodiments of an optical transmission apparatus according to the present invention will be explained below in detail with reference to the accompanying drawings. The present invention is not limited to the embodiments.

### [Embodiment]

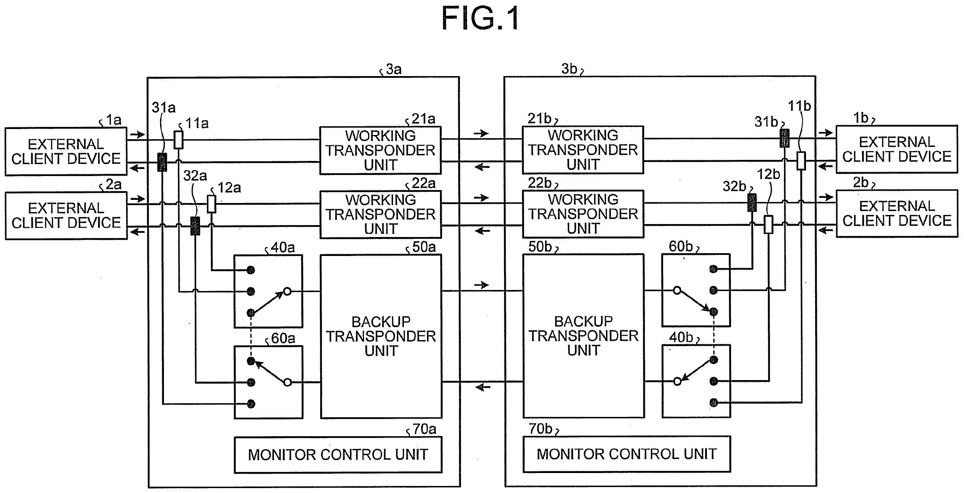

FIG. 1 is a configuration example of an optical transmission network including optical transmission apparatuses according to the present invention. The optical transmission network includes external client devices 1a, 1b, 2a, and 2b, and optical transmission apparatuses 3a and 3b. The external client devices 1a, 1b, 2a, and 2b are connected to the optical transmission apparatuses 3a and 3b to provide data transfer between opposing external client devices. The optical transmission apparatuses 3a and 3b transmit or receive optical signals to or from an opposing apparatus (an optical transmission apparatus) and relay communication between the external client devices 1a and 1b and communication between the external client devices 2a and 2b. For example, when the external client device 1a transmits data, the optical transmission apparatus 3a receives the data and then transfers the data to the optical transmission apparatus 3b, and the optical transmission apparatus 3b transfers the data to the external client device 1b. While two transmission lines are shown in some positions between the apparatuses or between constituent elements for the sake of explanations, any one of these can be replaced by one transmission line.

Generally, an optical transmission apparatus having a redundancy switching function includes M working transponder units and N backup transponder units (M is an integer smaller than N). Specifically, a case where each of the optical transmission apparatuses 3a and 3b includes 2 (N=2) working transponder units and 1 (M=1) backup transponder unit is explained. While the optical transmission apparatuses 3a and 3b can be applied to WDM (Wavelength Division Multiplexing) devices that perform wavelength multiplexing into optical fibers to realize transmission and reception of optical signals between devices, descriptions of a multiplexer/demultiplexer that performs wavelength multiplexing or demultiplexing and an optical amplifier that amplifies optical signals, which are typical constituent elements, will be omitted.

The optical transmission apparatus 3a includes optical coupler units 11a and 12a, working transponder units 21a and 22a, 2:1 optical switch unit 31a and 32a, an N+M:M optical switch unit (3:1 optical switch unit) 40a, a backup transponder unit 50a, an M:N+M optical switch unit (1:3 optical switch unit) 60a, and a monitor control unit 70a. The optical transmission apparatus 3b has the same configuration.

The optical coupler unit 11a branches an optical signal received from the external client device 1a to output the signal to the working transponder unit 21a and the 3:1 optical switch unit 40a. The optical coupler unit 12a branches an optical signal received from the external client device 2a to output the signal to the working transponder unit 22a and the 3:1 optical switch unit 40a. During normal communication, the working transponder unit 21a performs transmission or reception of an optical signal to or from the optical transmission apparatus 3b to relay communication between the external client devices 1a and 1b. During normal communication, the working transponder unit 22a performs transmission or reception of an optical signal to or from the optical transmission apparatus 3b to relay communication between the external client devices 2a and 2b.

The 2:1 optical switch unit 31a selects one of an optical signal from the working transponder unit 21a and an optical signal from the 1:3 optical switch unit 60a and outputs the selected signal to the external client device 1a. The 2:1 optical switch unit 32a selects one of an optical signal from the working transponder unit 22a and an optical signal from the 1:3 optical switch unit 60a and outputs the selected signal to the external client device 2a. The 3:1 optical switch unit 40a selects one of three input signals and outputs the selected signal to the backup transponder unit 50a. The backup transponder unit 50a relays communication between the external client devices when a failure occurs in the working transponder unit 21a or 22a, or working transponder unit 21b or 22b of the optical transmission apparatus 3b.

The 1:3 optical switch unit 60a selects one of three output destinations and outputs thereto a signal from the backup transponder unit 50a. The monitor control unit 70a monitors a failure in the working transponder units 21a and 22a and the backup transponder unit 50a in the optical transmission apparatus 3a. Upon the occurrence of a failure, the monitor control unit 70a performs switching control on transmission lines of the working transponder units 21a and 22a, the backup transponder unit 50a, the 2:1 optical switch units 31a and 32a, the 3:1 optical switch unit 40a, and the 1:3 optical switch unit 60a. Because the monitor control unit 70a performs redundancy switching, it has a memory that manages and stores therein information of identification numbers, priorities, and interface types of the working transponder units 21a and 22a. The information can be changed by provision of a unit for performing setting through an external management device (not shown).

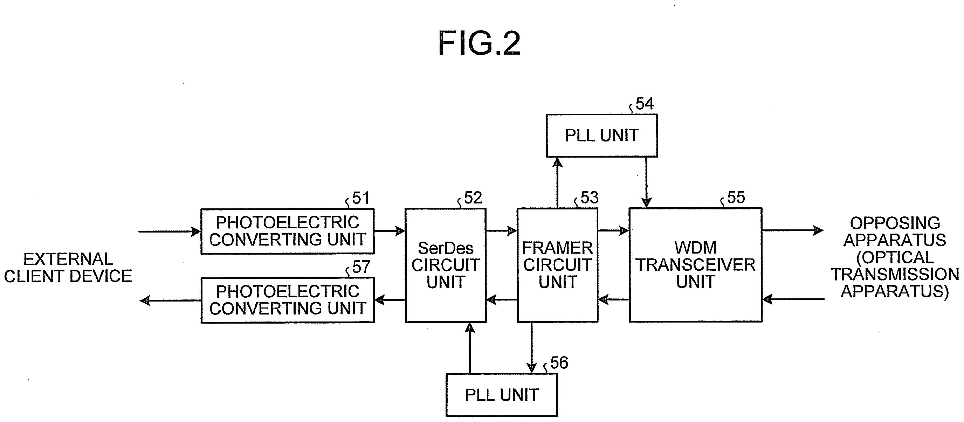

FIG. 2 is a configuration example of the backup transponder unit 50a. The backup transponder unit 50a includes a photoelectric converting unit 51, a SerDes (Serializer/Deserializer) circuit unit 52, a framer circuit unit 53, a PLL (Phase Locked Loop) unit 54, a WDM transceiver unit 55, a PLL unit 56, and a photoelectric converting unit 57. A backup transponder unit 50b of the optical transmission apparatus 3b has the same configuration.

The photoelectric converting unit 51 converts an optical signal from the external client device 1a or 2a into an electrical signal and outputs the signal to the SerDes circuit unit 52. The SerDes circuit unit 52 performs conversion between a serial electrical signal and a parallel electrical signal. The SerDes circuit unit 52 performs transmission or reception of the serial electrical signal to or from the photoelectric converting units 51 and 57, and also performs transmission or reception of the parallel electrical signal to or from the framer circuit unit 53. The framer circuit unit 53 terminates a signal received from the external client device 1a or 2a or the opposing apparatus (the optical transmission apparatus 3b), performs error detection, data conversion, error correction, and the like, and thereafter generates a signal to be transmitted to the opposing apparatus or the external client device 1a or 1b. This is a framer circuit such as an OTN (Optical Transport Network) framer LSI (Large Scale Integration).

The PLL unit 54 generates a clock for generating the signal to be transmitted to the opposing apparatus.
The WDM transceiver unit 55 transmits or receives the optical signal to or from the opposing apparatus at a specific wavelength. The PLL unit 56 generates a clock for generating the signal to be transmitted to the external client device 1a or 2a, and is equipped with a mode in which the clock is generated by extracting a clock from a signal received from the opposing apparatus, and a mode in which the clock is generated from a clock included therein. The photoelectric converting unit 57 converts the electrical signal from the SerDes circuit 52 into an optical signal and outputs the optical signal to the external client device 1a or 1b.

As operations of the optical transmission apparatus 3a or 3b, an operation performed in a standby state of the backup transponder unit, a redundancy switching operation performed when a working transponder unit having a lower priority breaks down, a redundancy switching operation performed when a working transponder unit having a higher priority than that of a working transponder unit that is currently protected breaks down, and an operation performed when communication between the backup transponder units is interrupted during a switching operation are explained below.

An operation performed in a standby state of the backup transponder unit is explained first. In FIG. 1, in a normal communication state, data transfer between the external client devices 1a and 1b is performed via the working transponder unit 21a of the optical transmission apparatus 3a and the working transponder unit 21b of the optical transmission apparatus 3b, and data transfer between the external client devices 2a and 2b is performed via the working transponder unit 22a of the optical transmission apparatus 3a and the working transponder unit 22b of the optical transmission apparatus 3b.

Wavelength multiplexing interfaces of the backup transponder units 50a and 50b (on the side of the optical transmission apparatus 3b viewed from the optical transmission apparatus 3a, for example) and client interfaces are in a state in which they have respectively transmitted optical signals, and transmit or receive the signals at a speed and in a format of STM-64, respectively. Accordingly, the monitor control unit 70a and a monitor control unit 70b sets an accommodation mode for signals to be processed in the framer circuits 53 of the backup transponder units 50a and 50b to STM-64. The monitor control units 70a and 70b also set an operation speed of the photoelectric converting units 51 and 57, the SerDes circuit 52, the framer circuit unit 53, the PLL units 54 and 56, and of the WDM transceiver unit 55 to the speed of STM-64.

The monitor control unit 70a sets an internal selector switch of the 3:1 optical switch unit 40a of the optical transmission apparatus 3a to select the 1:3 optical switch unit 60a. The monitor control unit 70a also sets an internal selector switch of the 1:3 optical switch unit 60a to select the 3:1 optical switch unit 40a. Similarly, the monitor control unit 70b selects an internal selector switch in a 3:1 optical switch unit 40b of the optical transmission apparatus 3b to select a 1:3 optical switch unit 60b. The monitor control unit 70b also sets an internal selector switch in the 1:3 optical switch unit 60b to select the 3:1 optical switch unit 40b.

In this state, the backup transponder units 50a and 50b receive a signal transmitted toward the external client devices by themselves, respectively. Accordingly, the monitor control units 70a and 70b set the PLL unit 56 of the backup transponder units 50a and 50b to perform an operation of generating a clock with the speed of STM-64 from a clock included therein, without extracting any clock from a signal received from the wavelength multiplexing interface (self-running).

This setting enables the monitor control units 70a and 70b to perform self monitoring based on a detection of signal input interruption when a breakdown occurs in the photoelectric converting unit 57, for example. It is also made possible to perform outputting of an optical signal including a stable clock and self monitoring on the side of the wavelength multiplexing interface. Accordingly, the operability and reliability of the optical transmission apparatus can be improved.

The monitor control unit 70a transmits information for switching control to the monitor control unit 70b of the opposing apparatus by using a partial area in a signal that the backup transponder unit 50a outputs to the wavelength multiplexing interface. The monitor control unit 70b analyzes the contents of the received switching control information to use for a switching control. Regarding the area and contents to be used for switching control, the same format as an APS (Auto Protection Switch) channel format can be used for an ODUk (Optical channel Data Unit-k) overhead area in an OTN frame, which is described in G.873.1 "Optical Transport Network (OTN): Linear protection" as ITU-T recommendations. In this way, the switching control can be realized with a simple configuration.

As for switching control performed when a failure occurs in the working transponder unit 21a having a lower priority while the backup transponder unit 50a is in a standby state, an operation in a case where the interface type of the working transponder unit 21a in which a failure has occurred is 10GbE LAN-PHY is explained below.

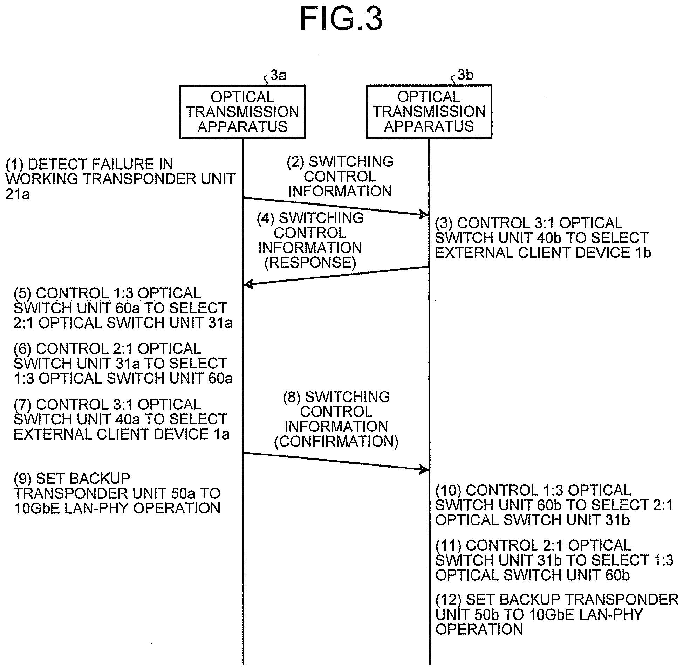

FIG. 3 is a sequence diagram of the switching control. (1) The monitor control unit 70a of the optical transmission apparatus 3a first detects a failure in the working transponder unit 21a. For example, this is a case where interruption of an optical signal to be received by the working transponder unit 21a is detected when the working transponder 21b of the optical transmission apparatus 3b breaks down and outputs no optical signal. (2) Upon detection of the failure, the monitor control unit 70a transmits switching control information to request switching to the optical transmission apparatus 3b.
(3) Upon receipt of the switching control information, the monitor control unit 70b of the optical transmission apparatus 3b controls the 3:1 optical switch unit 40b to select an input from the external client device 1b. This causes data transmitted from the external client device 1b to be transferred not only by the working transponder unit 21b but also by the backup transponder unit 50b and received by the backup transponder unit 50a. (4) The monitor control unit 70b transmits switching control information (response) to the monitor control unit 70a of the optical transmission apparatus 3a.
(5) Upon receipt of the switching control information (response), the monitor control unit 70a controls the 1:3 optical switch unit 60a to select the 2:1 optical switch unit 31a. (6) The monitor control unit 70a also controls the 2:1 optical switch unit 31a to select the 1:3 optical switch unit 60a. This enables the external client device 1a to receive the data from the external client device 1b via the backup transponder unit 50a.
(7) The monitor control unit 70a then controls the 3:1 optical switch unit 40a to select an input from the external client device 1a. This causes data transmitted from the external client device 1a to be transferred not only by the working transponder unit 21a but also by the backup transponder unit 50a and received by the backup transponder unit 50b. (8) The monitor control unit 70a transmits switching control information (confirmation) to the switching control information (response) to the monitor control unit 70b.
(9) After transmitting the switching control information (confirmation), the monitor control unit 70a controls the backup transponder unit 50a to transmit or receive signals at a speed and in a format of 10GbE LAN-PHY. That is, the monitor control unit 70a sets an accommodation mode for signals to be processed in the framer circuit unit 53 of the backup transponder unit 50a to 10GbE LAN-PHY.
   The operation speed of the photoelectric converting units 51 and 57, the SerDes circuit unit 52, the framer circuit unit 53, the PLL units 54 and 56, and of the WDM transceiver unit 55 is set to the speed of 10GbE LAN-PHY. The PLL unit 56 is set to perform an operation (slave-running) of extracting a clock from a signal received from the wavelength multiplexing interface.
(10) Upon receipt of the switching control information (confirmation), the monitor control unit 70b controls the 1:3 optical switch unit 60b to select the 2:1 optical switch unit 31b. (11) The monitor control unit 70b also controls the 2:1 optical switch unit 31b to select the 1:3 optical switch unit 60b. In this way, the external client device 1b can receive the data from the external client device 1a via the backup transponder unit 50b.
(12) The monitor control unit 70b controls the backup transponder unit 50b to transmit or receive signals at the speed and in the format of 10GbE LAN-PHY. That is, the accommodation mode for signals to be processed in the framer circuit unit 53 of the backup transponder unit 50b is set to 10GbE LAN-PHY. The operation speed of the photoelectric converting units 51 and 57, the SerDes circuit unit 52, the framer circuit unit 53, the PLL units 54 and 56, and of the WDM transceiver unit 55 is set to the speed of 10GbE LAN-PHY. The PLL unit 56 is set to perform an operation (slave-running) of extracting a clock from a signal received from the wavelength multiplexing interface.
   With the operations described above, when a failure is detected in the working transponder unit 21a, the accommodation mode for signals to be processed by the backup transponder units 50a and 50b is changed under control of the monitor control units 70a and 70b, thereby performing switching control of the transmission lines passing through the backup transponder units 50a and 50b. Accordingly, the optical transmission apparatuses 3a and 3b transfer data of 10GbE LAN-PHY between the external client devices 1a and 1b via the backup transponder units 50a and 50b.
   As for switching control performed when a failure occurs in the working transponder unit 22a or 22b having a higher priority than those of the working transponder units 21a and 21b which are currently protected by the backup transponder units 50a and 50b, an operation in a case where the interface type of the working transponder unit 22a is STM-64 is explained below.

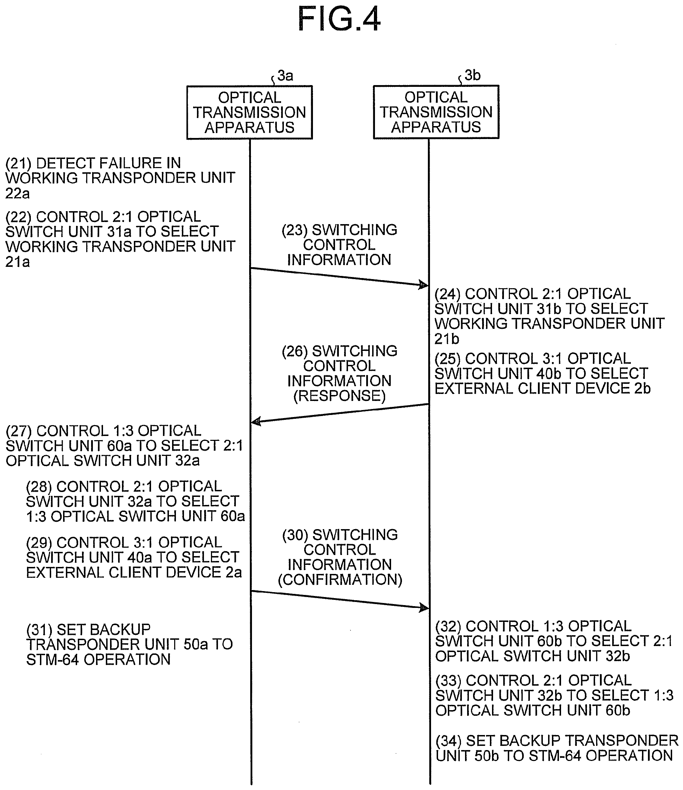

   FIG. 4 is a sequence diagram of switching control. (21) The monitor control unit 70a of the optical transmission apparatus 3a first detects a failure in the working transponder unit 22a. The monitor control unit 70a refers to the internal memory and checks the priority of the working transponder unit 22a having the failure detected. Subsequent processes are not performed when the priority of the working transponder unit 22a is lower than or equal to that of the working transponder unit 21a that is currently protected. The following control is performed when the priority of the working transponder unit 22a is higher than that of the working transponder unit 21a.
(22) The monitor control unit 70a controls the 2:1 optical switch unit 31a to select the working transponder unit 21a. This causes the data transmitted from the external client device 1b to be transferred to the external client device 1a via the working transponder units 21b and 21a. (23) The monitor control unit 70a transmits switching control information to request switching.
(24) Upon receipt of the switching control information, the monitor control unit 70b of the optical transmission apparatus 3b controls the 2:1 optical switch unit 31b to select the working transponder unit 21b. (25) The monitor control unit 70b then controls the 3:1 optical switch unit 40b to select an input from the external client device 2b. This causes data transmitted from the external client device 2b to be transferred not only by the working transponder unit 22b but also by the backup transponder unit 50b and received by the backup transponder unit 50a. (26) The monitor control unit 70b transmits switching control information (response) to the monitor control unit 70a of the optical transmission apparatus 3a.
(27) Upon receipt of the switching control information (response), the monitor control unit 70a controls the 1:3 optical switch unit 60a to select the 2:1 optical switch unit 32a. (28) The monitor control unit 70a also controls the 2:1 optical switch unit 32a to select the 1:3 optical switch unit 60a. This enables the external client device 2a to receive the data from the external client device 2b via the backup transponder unit 50a.
(29) The monitor control unit 70a then controls the 3:1 optical switch unit 40a to select an input from the external client device 2a. This causes data transmitted from the external client device 2a to be transferred not only by the working transponder unit 22a but also by the backup transponder unit 50a and received by the backup transponder unit 50b. (30) The monitor control unit 70a transmits switching control information (confirmation) with respect to the switching control information (response) to the monitor control unit 70b.
(31) After transmitting the switching control information (confirmation), the monitor control unit 70a controls the backup transponder unit 50a to transmit or receive signals at the speed and in the format of STM-64. That is, the accommodation mode for signals to be processed in the framer circuit unit 53 of the backup transponder unit 50a is set to STM-64, and the operation speed of the photoelectric converting units 51 and 57, the SerDes circuit unit 52, the framer circuit unit 53, the PLL units 54 and 56, and of the WDM transceiver unit 55 is set to that of STM-64. The PLL unit 56 is set to perform an operation (slave-running) of extracting a clock from a signal received from the wavelength multiplexing interface.
(32) Upon receipt of the switching control information (confirmation), the monitor control unit 70b controls the 1:3 optical switch unit 60b to select the 2:1 optical switch unit 32b. (33) The monitor control unit 70b also controls the 2:1 optical switch unit 32b to select the 1:3 optical switch unit 60b. This enables the external client device 2b to receive the data from the external client device 2a via the backup transponder unit 50b.
(34) The monitor control unit 70b controls the backup transponder unit 50b to transmit or receive signals at the speed and in the format of STM-64. That is, the accommodation mode for signals to be processed in the framer circuit unit 53 of the backup transponder unit 50b is set to STM-64, and the operation speed of the photoelectric converting units 51 and 57, the SerDes circuit unit 52, the framer circuit unit 53, the PLL units 54 and 56, and of the WDM transceiver unit 55 is set to that of STM-64. The PLL unit 56 is set to perform an operation of extracting a clock from a signal received from the wavelength multiplexing interface (slave-running).

With the operation described above, when a failure is detected in the working transponder unit 22a, the accommodation modes of signals to be processed by the backup transponder units 50a and 50b are changed under control of the monitor control units 70a and 70b to change protection targets of the backup transponder units 50a and 50b. Accordingly, the optical transmission apparatuses 3a and 3b can transfer STM-64 data between the external client devices 2a and 2b via the backup transponder units 50a and 50b, thereby preferentially protecting higher-priority signals. The optical transmission apparatuses 3a and 3b transfer 10GbE LAN-PHY data between the external client devices 1a and 1b via the working transponder units 21a and 21b.

An operation performed when communication between the backup transponder units 50a and 50b is interrupted during the switching operation described above, which is performed due to the failure of the working transponder unit 22a, is explained below.

A case where an optical signal from the backup transponder unit 50a to the backup transponder unit 50b is interrupted during the processes (27) to (29) of the sequence diagram in FIG. 4 is considered. For example, when an optical fiber between the optical transmission apparatuses 3a and 3b is cut or an optical amplifier breaks down, communication is interrupted not only between the working transponder units 21a and 22a but also between the backup transponder units 50a and 50b.

At this time, there is a possibility that the interface type of the backup transponder unit 50a becomes STM-64, which is the same type as the working transponder unit 22a and the interface type of the backup transponder unit 50b remains 10GbE LAN-PHY, which is the same as the working transponder unit 21b, because of a timing difference between the failure occurrence and the failure detection. Because the interface types of the backup transponder units 50a and 50b are different, data cannot be retrieved properly, and transmission and reception of the switching control information between the monitor control units 70a and 70b cannot be performed even after the disconnection of the optical fiber or the failure in the optical amplifier is restored to enable transmission and reception of the optical signal between the backup transponder units 50a and 50b.

Accordingly, upon detection of a failure in the backup transponder unit 50a or 50b, the monitor control units 70a and 70b change the interface types of the backup transponder units 50a and 50b to a predetermined type. For example, the predetermined type is set to STM-64.

When the optical signal from the backup transponder unit 50a to the backup transponder unit 50b is interrupted during the processes (27) to (29) of the sequence diagram in FIG. 4, normal reception of signals in each of the monitor control units 70a and 70b is prevented because the monitor control units 70a and 70b have different types. Accordingly, clock extraction becomes impossible, an error in reception data is detected, and a failure is detected. At this time, the monitor control units 70a and 70b change the interface types of the backup transponder units 50a and 50b to the predetermined type, STM-64.

As a result, this enables communication between the monitor control units 70a and 70b again and thereafter the switching operation can be continued according to whether or not a failure in the working transponder unit is detected, without any manpower. It is also possible to set the predetermined interface type to the same type as that of a higher-priority working transponder unit and change the interface type to this type in the standby state of the backup transponder unit. In this case, when a breakdown in the higher-priority working transponder unit occurs, changes of the interface type shown by (9) and (12) of the sequence diagram in FIG. 3 can be eliminated, resulting in a faster switching.

As described above, in the present embodiment, the monitor control unit manages the interface type of the corresponding working transponder unit and performs switching control to change the interface type of the backup transponder unit according to the working transponder unit to be protected. Accordingly, also in cases where different interface types are to be handled, a redundancy switching function can be provided with lower installation costs without complicating the device configuration.

While selection of an output from the working transponder unit or the backup transponder unit is performed by using the 2:1 optical switch unit in the present embodiment, the present invention is not limited thereto. For example, the present invention can be realized by using an optical coupler unit instead of the 2:1 optical switch unit to shut down (stop) an optical output of either the working transponder unit or the backup transponder unit, instead of changing selection of the 2:1 optical switch unit.

While the operation of the clock in the PLL unit 56 is switched between the self-running operation and the slave-running operation, the present invention is not limited thereto. For example, the present invention can be realized by switching the operation of the clock in the PLL unit 54.

It is also possible to provide a configuration that does not loop back the signal output from the backup transponder unit to the external client device and does not perform self monitoring. In this case, the N+M:M optical switch unit and the M:N+M optical switch unit, which are used as the optical switch units, can be replaced by an N:M optical switch unit and an M:N optical switch unit, respectively.

### Industrial Applicability

As described above, the optical transmission apparatus according to the present invention is useful for communicating optical signals, and is particularly suitable when the apparatus has a redundancy function of a transponder.

### Reference Signs List

1a, 1b, 2a, 2b EXTERNAL CLIENT DEVICE
3a, 3b OPTICAL TRANSMISSION APPARATUS
11a, 11b, 12a, 12b OPTICAL COUPLER UNIT
21a, 21b, 22a, 22b WORKING TRANSPONDER UNIT
31a, 31b, 32a, 32b 2:1 OPTICAL SWITCH UNIT
40a, 40b 3:1 OPTICAL SWITCH UNIT (N+M:M OPTICAL SWITCH UNIT)
50a, 50b BACKUP TRANSPONDER UNIT
51 PHOTOELECTRIC CONVERTING UNIT
52 SerDes SERCUIT UNIT
53 FRAMER CIRCUIT UNIT
54 PLL UNIT
55 WDM TRANSCEIVER UNIT
56 PLL UNIT
57 PHOTOELECTRIC CONVERTING UNIT
60a, 60b 1:3 OPTICAL SWITCH UNIT (M:N+M OPTICAL SWITCH UNIT)
70a, 70b MONITOR CONTROL UNIT

## Claims

1. An optical transmission apparatus that configures an optical transmission system with external devices to relay optical signals from the external devices, the optical transmission apparatus comprising:
N working optical transmitting/receiving units (21a-22b) that relay respective optical signals on corresponding working transmission lines to or from N external devices (1a-2b), wherein N is an integer;
M backup optical transmitting/receiving units (50a, 50b) that can relay optical signals of different interface types, wherein M is a non-zero integer smaller than N;
a switching unit (31a-32b, 40a, 40b, 60a, 60b) that connects one of the working optical transmitting/receiving units to each of the N external devices and also can connect one of the backup optical transmitting/receiving units to each of a maximum of M external devices; and
a monitor control unit (70a, 70b) that includes a storage unit that stores therein priorities defined for the respective working optical transmitting/receiving units, and monitors occurrence of a failure in the working optical transmitting/receiving units and the backup optical transmitting/receiving units and performs control to switch the transmission lines upon detection of the failure, wherein
when the monitor control unit has detected a failure in the working optical transmitting/receiving unit, the monitor control unit designates a backup optical transmitting/receiving unit that performs a substitute relay and performs switching control of the transmission lines for the switching unit and the designated backup optical transmitting/receiving unit so that the backup optical transmitting/receiving unit relays an optical signal for the working optical transmitting/receiving unit having the failure detected, and
the backup optical transmitting/receiving unit sets an interface type of the optical signal to be relayed, to a same type as that of the working optical transmitting/receiving unit having the failure detected under control of the monitor control unit, and then starts relay of the optical signal, and wherein
the monitor control unit, when all the backup optical transmitting/receiving units perform relay of the optical signal and a failure in a working optical transmitting/receiving unit is detected, uses the storage unit to determine whether or not there is a working optical transmitting/receiving unit having a lower priority than that of the working optical transmitting/receiving unit having the failure detected among the working optical transmitting/receiving units that are not involved in relaying the optical signal, and when there is a lower-priority working optical transmitting/receiving unit, performs switching control of the transmission lines so that relay of a backup optical transmitting/receiving unit that performs relay of the optical signal for the lower-priority working optical transmitting/receiving unit is stopped and the stopped backup optical transmitting/receiving unit starts relay of the optical signal for the working optical transmitting/receiving unit having the failure detected.

2. The optical transmission apparatus according to claim 1, wherein when there is a backup optical transmitting/receiving unit that is not involved in relaying the optical signal, the monitor control unit performs control to set an interface type of the backup optical transmitting/receiving unit to an interface type of a working optical transmitting/receiving unit having a higher priority.

3. The optical transmission apparatus according to claim 1 or 2, wherein when a failure in a backup optical transmitting/receiving unit is detected, the monitor control unit performs control to change an interface type of the backup optical transmitting/receiving unit to a predetermined interface type.

4. The optical transmission apparatus according to any one of claims 1 to 3, wherein the monitor control unit exchanges control information for performing switching control with another optical transmission apparatus by using a line of a backup optical transmitting/receiving unit.

5. The optical transmission apparatus according to any one of claims 1 to 4, wherein the switching unit includes a loopback unit that, when receiving a signal from a backup optical transmitting/receiving unit, can return the received signal to the backup optical transmitting/receiving unit.

6. The optical transmission apparatus according to claim 5, wherein when there is a backup optical transmitting/receiving unit that is not involved in relaying the optical signal, the monitor control unit performs switching control of the transmission lines so that the loopback unit returns a signal transmitted to the switching unit by the backup optical transmitting/receiving unit, to the backup optical transmitting/receiving unit, and performs control to self-monitor a signal transmitted by itself to the backup optical transmitting/receiving unit.

7. The optical transmission apparatus according to claim 6, wherein the backup optical transmitting/receiving unit includes a clock generating unit that generates a clock for generating a signal to be transmitted to the switching unit.

## Patentansprüche

1. Optische Übertragungsvorrichtung, die ein optisches Übertragungssystem mit externen Geräten konfiguriert, um optische Signale von den externen Geräten zu übermitteln, wobei die optische Übertragungsvorrichtung Folgendes umfasst:
N arbeitende optische Übertragungs-/Empfangseinheiten (21a-22b), die jeweilige optische Signale an entsprechenden arbeitenden Übertragungsleitungen zu oder von N externen Geräten (1a-2b) übermitteln, wobei N eine Ganzzahl ist;
M optische Backup-Übertragungs-/Empfangseinheiten (50a, 50b), die optische Signale von verschiedenen Schnittstellentypen übermitteln können, wobei M eine Ganzzahl ungleich Null ist, die kleiner als N ist;
eine Schalteinheit (31a-32b, 40a, 40b, 60a, 60b), die eine der arbeitenden optischen Übertragungs-/Empfangseinheiten mit jedem der N externen Geräte verbindet und außerdem eine der optischen Backup-Übertragungs-/Empfangseinheiten mit jedem von einem Maximum von M externen Geräten verbinden kann; und
eine Überwachungssteuereinheit (70a, 70b), die eine Speichereinheit umfasst, die darin Prioritäten speichert, die für die entsprechenden arbeitenden optischen Übertragungs-/Empfangseinheiten definiert sind, und das Auftreten eines Fehlers in den arbeitenden optischen Übertragungs-/Empfangseinheiten und den optischen Backup-Übertragungs-/Empfangseinheiten überwacht und eine Steuerung durchführt, um die Übertragungsleitungen bei Erfassen des Fehlers zu schalten, wobei
wenn die Überwachungssteuereinheit einen Fehler in arbeitenden optischen Übertragungs-/Empfangseinheit erfasst hat, die Überwachungssteuereinheit eine optische Backup-Übertragungs-/Empfangseinheit bestimmt, die eine Ersatzübermittlung durchführt und eine Schaltsteuerung der Übertragungsleitungen für die Schalteinheit und die bestimmte optische Backup-Übertragungs-/Empfangseinheit durchführt, sodass die optische Backup-Übertragungs-/Empfangseinheit ein optisches Signal für die arbeitende optische Übertragungs-/Empfangseinheit mit dem erfassten Fehler übermittelt, und
die optische Backup-Übertragungs-/Empfangseinheit einen Schnittstellentyp des optischen Signals, das übermittelt werden soll, auf einen gleichen Typ wie den der arbeitenden optischen Übertragungs-/Empfangseinheit mit dem unter der Steuerung der Überwachungssteuereinheit erfassten Fehler einstellt und dann eine Übermittlung des optischen Signals startet, und wobei
die Überwachungssteuereinheit, wenn alle optischen Backup-Übertragungs-/Empfangseinheiten eine Übermittlung des optischen Signals durchführen und ein Fehler bei einer arbeitenden optischen Übertragungs-/Empfangseinheit erfasst wird, die Speichereinheit verwendet, um zu bestimmen, ob es eine arbeitende optische Übertragungs-/Empfangseinheit mit einer niedrigeren Priorität als die der arbeitenden optischen Übertragungs-/Empfangseinheit mit dem erfassten Fehler unter den arbeitenden optischen Übertragungs-/Empfangseinheiten, die beim Übermitteln des optischen Signals nicht beteiligt sind, gibt oder nicht, und wenn es eine arbeitende optische Übertragungs-/Empfangseinheit mit niedrigerer Priorität gibt, eine Schaltsteuerung der Übertragungsleitungen durchführt, sodass eine Übermittlung einer optischen Backup-Übertragungs-/Empfangseinheit, die eine Übermittlung des optischen Signals für die optische Übertragungs-/Empfangseinheit mit niedrigerer Priorität durchführt, gestoppt wird, und die gestoppte optische Backup-Übertragungs-/Empfangseinheit eine Übermittlung des optischen Signals für die arbeitende optische Übertragungs-/Empfangseinheit mit dem erfassten Fehler startet.

2. Optische Übertragungsvorrichtung nach Anspruch 1, wobei, wenn es eine optische Backup-Übertragungs-/Empfangseinheit gibt, die nicht am Übermitteln des optischen Signals beteiligt ist, die Überwachungssteuereinheit eine Steuerung durchführt, um einen Schnittstellentyp der optischen Backup-Übertragungs-/Empfangseinheit zu einem Schnittstellentyp einer arbeitenden optischen Übertragungs-/Empfangseinheit mit einer höheren Priorität einzustellen.

3. Optische Übertragungsvorrichtung nach Anspruch 1 oder 2, wobei, wenn ein Fehler in einer optischen Backup-Übertragungs-/Empfangseinheit erfasst wird, die Überwachungssteuereinheit eine Steuerung durchführt, um einen Schnittstellentyp der optischen Backup-Übertragungs-/Empfangseinheit zu einem vorbestimmten Schnittstellentyp zu wechseln.

4. Optische Übertragungsvorrichtung nach einem der Ansprüche 1 bis 3, wobei die Überwachungssteuereinheit Steuerinformationen zum Durchführen einer Schaltsteuerung mit einer anderen optischen Übertragungsvorrichtung unter Verwendung einer Leitung einer optischen Backup-Übertragungs-/Empfangseinheit austauscht.

5. Optische Übertragungsvorrichtung nach einem der Ansprüche 1 bis 4, wobei die Schalteinheit eine Loopback-Einheit umfasst, die, wenn sie ein Signal von einer optischen Backup-Übertragungs-/Empfangseinheit empfängt, das empfangene Signal zu der optischen Backup-Übertragungs-/Empfangseinheit zurückschicken kann.

6. Optische Übertragungsvorrichtung nach Anspruch 5, wobei, wenn es eine optische Backup-Übertragungs-/Empfangseinheit gibt, die nicht am Übermitteln des optischen Signals beteiligt ist, die Überwachungssteuereinheit ein Schalten der Steuerung der Übertragungsleitungen durchführt, sodass die Loopback-Einheit ein Signal, das zu der Schalteinheit durch die optische Backup-Übertragungs-/Empfangseinheit übertragen wird, an die optische Backup-Übertragungs-/Empfangseinheit zurückschickt und eine Steuerung durchführt, um ein Signal, das durch sie selbst an die optische Backup-Übertragungs-/Empfangseinheit übertragen wird, selbst zu überwachen.

7. Optische Übertragungsvorrichtung nach Anspruch 6, wobei die optische Backup-Übertragungs-/Empfangseinheit eine Taktsignalerzeugungseinheit umfasst, die ein Taktsignal zum Erzeugen eines Signals erzeugt, das zu der Schalteinheit übertragen werden soll.

## Revendications

1. Appareil de transmission optique qui configure un système de transmission optique avec des dispositifs externes pour relayer des signaux optiques depuis les dispositifs externes, l'appareil de transmission optique comprenant :
N unités optiques d'émission/réception actives (21a- 22b) qui relaient des signaux optiques respectifs sur des lignes de transmission actives correspondantes vers ou depuis N dispositifs externes (1a-2b), N étant un nombre entier ;
M unités optiques d'émission/réception de sauvegarde (50a, 50b) qui peuvent relayer des signaux optiques de différents types d'interfaces, M étant un nombre entier différent de zéro inférieur à N;
une unité de commutation (31a-32b, 40a, 40b, 60a, 60b) qui relie une des unités optiques d'émission/réception actives à chacun des N dispositifs externes et peut aussi relier une des unités optiques d'émission/réception de sauvegarde à chaque dispositif parmi un maximum de M dispositifs externes ; et
une unité de commande de contrôle (70a, 70b) qui comprend une unité de stockage qui stocke à l'intérieur des priorités définies pour les unités optiques respectives d'émission/réception actives, et contrôle l'apparition d'une défaillance dans les unités optiques d'émission/réception actives et les optiques d'émission/réception de sauvegarde, et effectue la commande pour commuter les lignes de transmission lors de la détection de la défaillance,
lorsque l'unité de commande de contrôle a détecté une défaillance dans l'unité optique d'émission/réception active, l'unité de commande de contrôle désignant une unité optique d'émission/réception de sauvegarde qui effectue un relais de substitution et effectue une commande de commutation des lignes de transmission pour l'unité de commutation et l'unité optique d'émission/réception de sauvegarde désignée de manière que l'unité optique d'émission/réception de sauvegarde relaie un signal optique pour l'unité optique d'émission/réception active présentant la défaillance détectée, et
l'unité optique d'émission/réception de sauvegarde définissant un type d'interface du signal optique devant être relayé, sur un même type que celui de l'unité optique d'émission/réception active présentant la défaillance détectée sous la commande de l'unité de commande de contrôle, et puis démarrant le relais du signal optique, et
l'unité de commande de contrôle, lorsque toutes les unités optiques d'émission/réception de sauvegarde effectuent un relais du signal optique et une défaillance dans l'unité optique d'émission/réception active est détectée, utilisant l'unité de stockage pour déterminer si oui ou non il existe une unité optique d'émission/réception active de priorité inférieure à celle de l'unité optique d'émission/réception active présentant la défaillance détectée parmi les unités d'émission/réception optique actives qui ne sont pas impliquées dans le relais du signal optique, et lorsqu'il existe une unité optique d'émission/réception active de priorité inférieure, effectuant une commande de commutation des lignes de transmission de manière qu'un relais de l'unité optique d'émission/réception de sauvegarde qui effectue un relais du signal optique pour l'unité optique d'émission/réception active de priorité inférieure est arrêté et l'unité optique d'émission/réception de sauvegarde arrêtée commence à relayer le signal optique pour l'unité optique d'émission/réception active présentant la défaillance détectée.

2. Appareil de transmission optique selon la revendication 1, dans lequel lorsqu'il existe une unité optique d'émission/réception de sauvegarde qui n'est pas impliquée dans le relais du signal optique, l'unité de commande de contrôle effectue une commande pour définir un type d'interface de l'unité optique d'émission/réception active de sauvegarde sur un type d'interface d'une unité optique d'émission/réception active présentant une priorité supérieure.

3. Appareil de transmission optique selon la revendication 1 ou 2, dans lequel lorsqu'une défaillance dans l'unité optique d'émission/réception de sauvegarde est détectée, l'unité de commande de contrôle effectue une commande pour changer un type d'interface de l'unité optique d'émission/réception de sauvegarde en un type d'interface prédéterminée.

4. Appareil de transmission optique selon l'une quelconque des revendications 1 à 3, dans lequel l'unité de commande de contrôle échange des informations de commande destinées à effectuer une commande de commutation avec un autre appareil de transmission optique à l'aide d'une ligne d'une unité optique d'émission/réception de sauvegarde.

5. Appareil de transmission optique selon l'une quelconque des revendications 1 à 4, dans lequel l'unité de commutation comprend une unité de bouclage qui, lors de la réception d'un signal provenant d'une unité optique d'émission/réception de sauvegarde, peut renvoyer le signal reçu à l'unité optique d'émission/réception de sauvegarde.

6. Appareil de transmission optique selon la revendication 5, dans lequel lorsqu'il existe une unité optique d'émission/réception de sauvegarde qui n'est pas impliquée dans le relais du signal optique, l'unité de commande de contrôle effectue une commande de commutation des lignes de transmission de manière que l'unité de bouclage renvoie un signal transmis à l'unité de commutation par l'unité optique d'émission/réception de sauvegarde, à l'unité optique d'émission/réception de sauvegarde, et effectue une commande pour auto-contrôler un signal transmis par elle-même à l'unité optique d'émission/réception de sauvegarde.

7. Appareil de transmission optique selon la revendication 6, dans lequel l'unité optique d'émission/réception de sauvegarde comprend une unité de génération d'horloge qui génère une horloge destinée à générer un signal devant être transmis à l'unité de commutation.
